# EUROPÄISCHE PATENTSCHRIFT

(11) **EP 1 630 080 B1**
(45) Veröffentlichungstag und Bekanntmachung des Hinweises auf die Patenterteilung: **13.02.2008**
(21) Anmeldenummer: 05011669.8
(22) Anmeldetag: 31.05.2005
(51) Int. Cl.: B62D 35/00

(54) **Heckseitige Luftleitvorrichtung für ein Vollheckkraftfahrzeug**
Rear spoiler for a fully rear-propelled vehicle
Becquet arrière pour un véhicule automobile avec propulsion arrière

(30) Priorität: 28.08.2004 DE 102004041720
(43) Veröffentlichungstag der Anmeldung: 01.03.2006
(73) Patentinhaber: Dr.Ing. h.c. F. Porsche Aktiengesellschaft, 70432 Stuttgart (DE)
(72) Erfinder: Preiß, Michael, 71665 Vaihingen (DE)

(56) Entgegenhaltungen:
- DE-A1- 2 428 616
- DE-A1- 2 649 953
- DE-A1- 2 748 874
- DE-A1- 10 028 696
- DE-A1- 19 603 122
- US-A- 4 881 772
- US-A1- 2001 035 662

## Beschreibung

Die Erfindung betrifft eine heckseitige Luftleitvorrichtung für ein Vollheck-Kraftfahrzeug.

Vollheck-Kraftfahrzeuge weisen gemäß dem Fachbuch "Aerodynamik des Automobils" von Wolf-Heinrich Hucho, 1. Auflage 1981, Seite 183, einen Heckneigungswinkel ϕ > 30° auf.

Es hat sich bei Versuchen herausgestellt, dass bei Heckneigungswinkeln zwischen 30° und 40° im Heckbereich des Kraftfahrzeuges strömungsmechanisch instabile Verhältnisse vorliegen. Bei Heckneigungswinkel ϕ < 30° reißt die Strömung an der Dachhinterkante mit klar definiertem und damit relativ kleinen Wirbelnachlauf ab. Bei Heckneigungswinkeln ϕ > 40° löst sich die Strömung an der unteren Kante der Heckschräge ab, begleitet von kräftigen seitlichen Randwirbeln, die den Wirbelnachlauf deutlich vergrößern und damit die aerodynamischen Kräfte (Widerstand und Auftrieb) erheblich steigern. Aus diesem Grunde wurde der Neigungswinkelbereich von 30° bis 40° jahrelang gemieden, bis Kraftfahrzeuge, insbesondere Sport Utility Vehicles diesen Neigungswinkelbereich als stylistisch "in" entdeckten. Zur Abhilfe der aerodynamischen Probleme mit den "modernen" Heckneigungswinkeln haben sich bei solchen Fahrzeugen Dachspoiler allgemein durchgesetzt. Für die Strömung ergibt sich damit ein kleinerer Heckneigungswinkel als optisch wahrnehmbar. Dieser Vollheck-Dachspoiler stellt also eher eine Dachverlängerung dar, die grundsätzlich ein geringeres Potential zur Reduzierung des Hinterachsauftriebs aufweist. Damit unterscheidet sich der Dachspoiler von üblichen Spoilern, die mit einer Umlenkung der Strömung zusätzliches Potential zur Auftriebsreduzierung generieren, damit aber auch eine Luftwiderstandssteigerung erzeugen und deswegen nur eine eingeschränkt aerodynamische Effizienz zeigen.

Bei Vollheck-Kraftfahrzeugen (z.B. BMW X5) ist es bekannt, im Bereich der Dachhinterkante oberhalb der Heckscheibe einen mit der Dachoberseite fluchtenden Dachspoiler anzuordnen, wodurch die heckseitige Abrisskante der Luftströmung nach hinten verlagert und somit das Totwassergebiet hinter dem Fahrzeug verkleinert wird. Der Dachspoiler reduziert die aerodynamische Auftriebskraft an der Hinterachse und sorgt für eine Verbesserung des Luftwiderstandes. Da der Dachspoiler aus optischen Gründen nur eine begrenzte Längserstreckung aufweisen kann, ist die aerodynamische Wirkung eines derartigen Dachspoilers begrenzt.

Die gattungsgemäße DE 24 28 616 zeigt eine im Bereich einer Dachhinterkante oberhalb einer Heckscheibe angeordnete heckseitige Luftleitvorrichtung für ein Vollheck-Kraftfahrzeug, wobei mittels dieser Luftleitvorrichtung die Heckscheibe bei entsprechender Witterung weitestgehend schmutzfrei gehalten werden soll. Diese Luftleitvorrichtung ist in den oberen Querholm der Heckscheibe integriert und umfasst einen sich innerhalb des Querholmes erstreckenden Einsatz, der einen Verbindungskanal zwischen einer Eintrittsöffnung und einer Austrittsöffnung bildet. Der Verbindungskanal verjüngt sich in Strömungsrichtung gesehen kontinuierlich und fällt nach hinten hin ab, wobei der hintere die Austrittsöffnung enthaltende Teilbereich des Verbindungskanals annähernd parallel zur Außenkontur der Heckscheibe verläuft.

Aufgabe der Erfindung ist es, eine heckseitige Luftleitvorrichtung für ein Vollheck-Kraftfahrzeug bei vorgegebener Längserstreckung so zu optimieren, dass die aerodynamische Effizienz, d.h. das Zusammenspiel von aerodynamischen Auftriebsreduzierung und möglichst geringem Luftwiderstand des Kraftfahrzeuges, verbessert wird.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass bei einem Vollheck-Kraftfahrzeug durch die Ausbildung der heckseitigen Luftleitvorrichtung als Spaltflügel die aerodynamische Effizienz der Luftleitvorrichtung wesentlich verbessert wird, da der Spaltflügel im Vergleich zu einem herkömmlichen Dachspoiler gleich dreifach für Abtrieb sorgt, nämlich an der Oberseite des Flügels, an der Unterseite des Flügels und im Durchströmkanal zwischen Flügel und Flügelbett. Dadurch kann bei kompakter Bauweise mehr Abtrieb bei gleichem Luftwiderstand bzw. weniger Luftwiderstand bei gleichem Abtrieb realisiert werden. Durch die drehbare Lagerung des Flügels lässt sich zudem eine aktive Verstellbarkeit des Flügels realisieren.

Ein Ausführungsbeispiel der Erfindung ist in der Zeichnung dargestellt und wird im Folgenden näher erläutert.

Es zeigen
- Fig. 1: eine Teildraufsicht auf den Heckbereich eines Vollheck-Kraftfahrzeuges mit einer heckseitigen Luftleitvorrichtung,
- Fig. 2: eine perspektivische Teilansicht von schräg hinten auf das Kraftfahrzeug mit der Luftleitvorrichtung,
- Fig. 3: einen Schnitt nach der Linie lll-lll der Fig. 1 in größerer Darstellung,
- Fig. 4: eine Teilseitenansicht auf die Luftleitvorrichtung mit einer ersten Stellung des Flügels,
- Fig. 5: eine Teilseitenansicht gemäß Fig. 2 mit einer zweiten, steiler angestellten Stellung des Flügels und
- Fig. 6: einen Schnitt ähnlich Fig. 3, wobei die Strömungsverhältnisse im Bereich der Luftleitvorrichtung dargestellt sind.

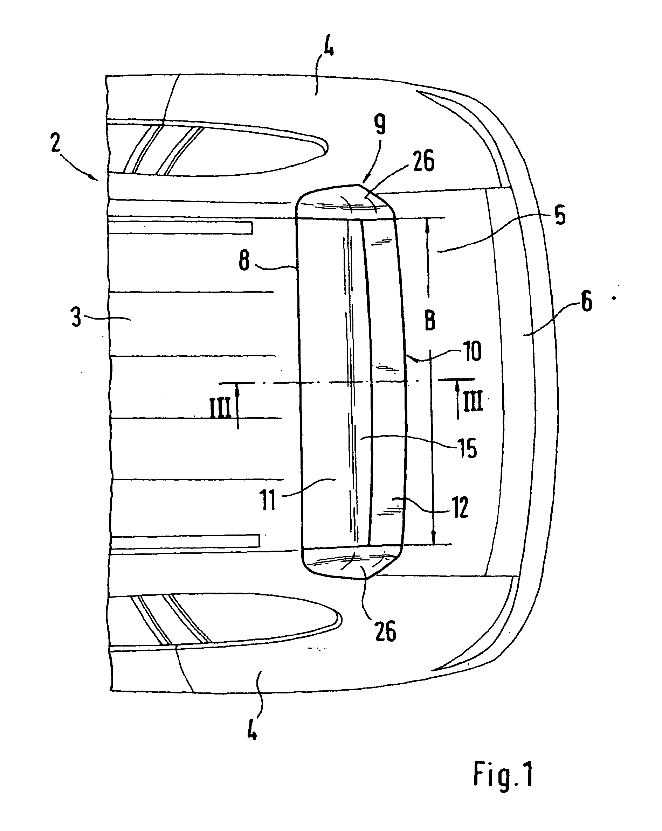

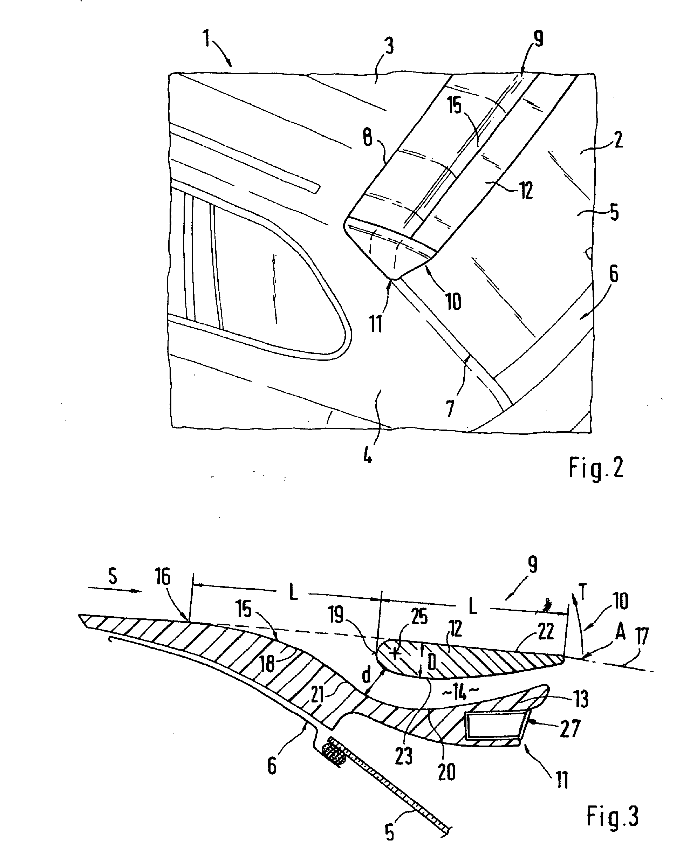

Ein durch einen Personenkraftwagen gebildetes Kraftfahrzeug 1 weist einen Aufbau 2 auf, der sich im dargestellten Bereich aus einem Dach 3, hinteren Seitenteilen 4 und einer Heckscheibe 5 zusammensetzt. Die Heckscheibe 5 ist im Ausführungsbeispiel einer Heckklappe 6 zugeordnet, die an ihrem oberen Rand unter Vermittlung von nicht näher dargestellten Scharnieren am angrenzenden Aufbau 2 angelenkt ist. Das in den Fig. 1 und 3 dargestellte Kraftfahrzeug 1 weist ein Vollheck 7 auf, d.h. das Heck ist unter einem Winkel ϕ größer 30° gegenüber einer horizontalen Ebene geneigt. Im Ausführungsbeispiel beträgt der Winkel ϕ beispielsweise 37°.

Damit bei geringem Luftwiderstand ein möglichst geringer Auftrieb an der Hinterachse des Kraftfahrzeuges vorliegt, ist im Bereich einer Dachhinterkante 8 oberhalb der Heckscheibe 5 eine heckseitige Luftleitvorrichtung 9 vorgesehen, die erfindungsgemäß als Spaltflügel 10 ausgebildet ist. Im Ausführungsbeispiel sind sämtliche Bauteile des Spaltflügels 10 einem ein- oder mehrteiligen heckseitigen Aufsatzteil 11 zugeordnet, das lösbar mit dem darunter liegenden Aufbau 2 verbunden ist. Das Aufsatzteil 11 ist mittels nicht näher dargestellter Befestigungsschrauben an einem oberen Randbereich der Heckklappe 6 befestigt. Das Aufsatzteil 11 weist etwa die Breite der darunter liegenden Heckklappe 6 auf (siehe Fig. 1).

Der Spaltflügel 10 umfasst einen oberen, quer verlaufenden Flügel 12, ein unteres, quer verlaufendes Flügelbett 13 und einen dazwischen liegenden spaltförmigen Durchströmkanal 14, wobei dem Durchströmkanal 14 eine Strömungsrampe 15 vorgelagert ist (siehe Fig. 3). Die Strömungsrampe 15 ist im Ausführungsbeispiel am Aufsatzteil 11 ausgebildet und beginnt etwa eine Flügellänge L vor dem eigentlichen Flügel 12; sie könnte jedoch auch am Dach 3 oder an beiden Bauteilen 3, 11 vorgesehen sein. Der in Fahrtrichtung gesehen vorne liegende Randbereich 16 der Strömungsrampe 15 fluchtet mit dem Dachstrak 17 und fällt danach über einen konvexen Bereich 18 nach unten hin ab. Kurz vor der Vorderkante 19 des Flügels 12 schließt sich ein konkaver Abschnitt 20 an, der die Oberseite des Flügelbetts 13 bzw. die Unterseite des Durchströmkanals 14 bildet. Im Bereich eines Wendepunktes 21 geht der konvexe Bereich 18 in den konkaven Bereich 20 über.

Der eine Breite B aufweisende Flügel 12 ist in den Fig. 1 bis 3 so angestellt, dass seine Oberseite 22 etwa mit einer gedachten Verlängerung des Dachstrakes 17 fluchtet (siehe Fig. 3). Diese luftwiderstandsgünstigste Flügelstellung A wird vorzugsweise bei schneller Autobahnfahrt verwendet.

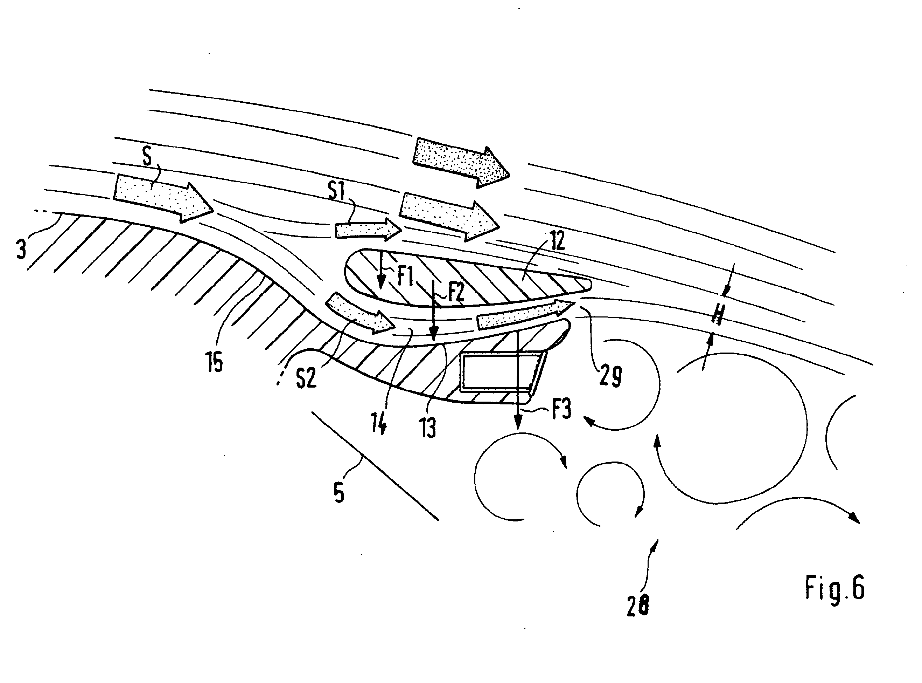

Der Flügel 12 kann entweder starr oder verstellbar mit dem Aufsatzteil 11 verbunden sein. Die Oberseite 22 des Flügels 12 weist nur eine geringe, nach oben gerichtete Bombierung auf, wogegen die Unterseite 23 wesentlich stärker nach unten hin gekrümmt ist. Der Durchströmkanal 14 verjüngt sich in Strömungsrichtung S gesehen kontinuierlich und steigt nach hinten hin an, wobei die untere und obere Begrenzung des Durchströmkanals 14 jeweils einen gekrümmten Formverlauf aufweisen. Eine hintere Ausströmöffnung des spaltförmigen Durchströmkanals 14 ist in Fig. 6 mit dem Bezugszeichen 29 gekennzeichnet.

Im Eingangsbereich 24 ist der Durchströmkanal 14 mindestens so breit (d), wie die maximale Dicke (D) des Flügels 12.

Danach verringert sich die Höhe des Durchströmkanals 14 nach hinten hin kontinuierlich. Die gesamte Längserstreckung L1 des Aufsatzteiles 11 entspricht etwa der zwei- bis dreifachen Flügellänge L. Im Ausführungsbeispiel ist der Flügel 12 um eine vordere quer verlaufende, horizontal ausgerichtete Drehachse 25 mit längs verlaufenden Seitenabschnitten 26 des Aufsatzteiles 11 verbunden und es ist eine aktive Verstellbarkeit des Flügels 12 vorgesehen.

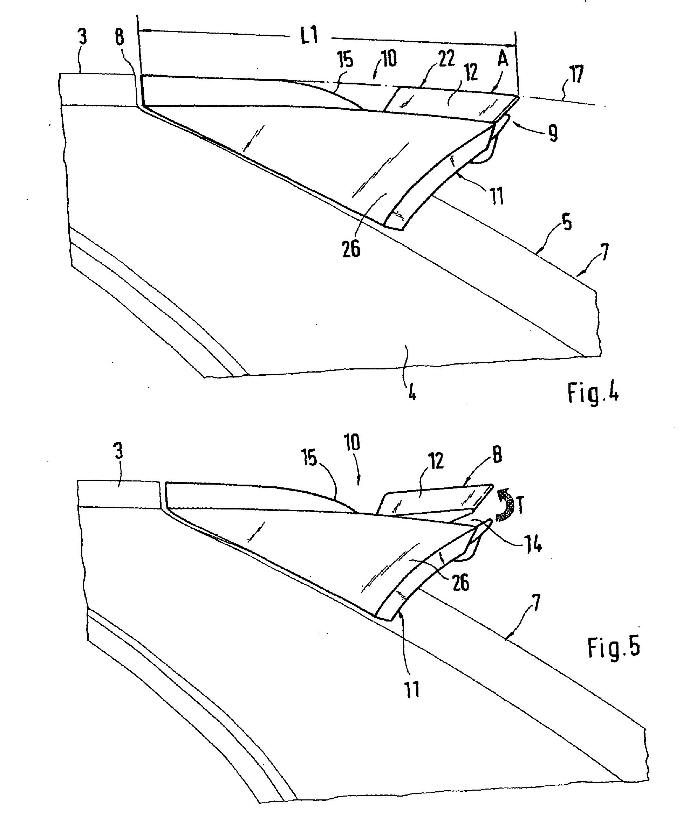

Wird der Flügel 12 um die Drehachse 25 in Pfeilrichtung T nach oben gedreht (Flügellage B), führen die erzeugten Umströmungskräfte zu einer Steigerung des Anpressdruckes und damit zu verbesserter Traktion an den angetriebenen Hinterrädern - also zu einem besseren Fahrbahnkontakt und dadurch sportlicherer Performance. Eine solche Anstellung ist für das sportliche Fahren auf einer Rundstrecke vorzuwählen, oder durch eine Sporttaste zu aktivieren (Fig. 5).

Konstruktiv könnte der Antrieb des Flügels 12 über eine Flexwelle und ein Getriebe erfolgen. Der Motor wird wegen des Platzbedarfs außerhalb des Aufsatzteiles 11 liegen müssen. Als Getriebe kann beispielsweise ein Zahnradgetriebe verwendet werden.

Außerdem ist denkbar, durch Beschleunigungs-, Geschwindigkeits- und Bremssensoren den sportlichen Fahrzustand zu identifizieren und adaptiv die Flügelanstellung so zu steuern, dass sich hohe Abtriebskräfte und eine möglichst gute Traktion einstellt. Damit steigt allerdings der Luftwiderstand. Deswegen wird bei schneller Autobahnfahrt auf die luftwiderstandsgünstigste Flügelstellung A (im Verlauf des Dachstraks) zurückgefahren.

Am Aufsatzteil 11 können GPS-Antennen, Radioantennen, Waschdüsen, hoch gesetzte Bremsleuchten oder dergleichen vorgesehen werden. Im Ausführungsbeispiel ist in einem mittleren Bereich der Quererstreckung des Aufsatzteiles 11 unterhalb des Durchströmkanals 14 eine Aufnahme für eine hoch gesetzte Bremsleuchte 27 angeordnet.

Die Funktion der heckseitigen Luftleitvorrichtung 9 und die Strömungsverhältnisse im Bereich dieser Luftleitvorrichtung sind in Fig. 6 näher dargestellt.

Die Strömung S kommt kaum gestört über das Dach 3 und wird von der Strömungsrampe 15 nach unten in den Dachströmungskanal 14 gezogen, so dass sie in einen Teilstrom S1 über den Flügel 12 und ein Teilstrom S2 in den Durchströmkanal 14 (Flügelspalt) aufgeteilt wird.

Je nachdem, wie stark der Flügel 12 angestellt wird, ergibt sich eine Druckkraft F1 auf der Fläche der Flügeloberseite 22 durch den Teilstrom S1 (je steiler die Anstellung desto höher der Druck und die Auftriebsreduzierung). Der Unterdruck auf der Fläche der Flügelunterseite wirkt noch stärker, weil durch die Beschleunigung in dem sich stetig verjüngenden Durchströmkanal 14 der Teilstrom S2 schneller wird und dadurch eine höhere Kraft F2 erzeugen kann. Der gleiche schnelle Teilstrom S2 drückt auch gegen das Flügelbett 13. Daraus resultiert eine Kraftkomponente F3 nach unten. Alle drei Kräfte wirken idealer Weise zur Fahrbahn hin und verstärken dadurch die Radlast an der Hinterachse. Damit wird die Traktion und infolge die Fahrsicherheit unterstützt.

Durch den Durchströmkanal 14 (Spalt) löst die Strömung tiefer, also näher zur Fahrbahn ab, wodurch das Totwassergebiet 28 reduziert wird. Die Grenzzone zwischen Totwasser und wenig gestörter Umströmung wird um die Spalthöhe H abgesenkt, wie der Mittelschnitt zeigt. Über die ganze Fahrzeugbreite wird somit das luftwiderstanderzeugende Ablösegebiet verkleinert und der Cw-Wert gesenkt.

Der Flügel 12 und/oder das restliche Aufsatzteil 11 können aus Kunststoff, Kohlefaser oder dergleichen hergestellt werden. Ferner kann der Flügel 12 die gleiche oder eine unterschiedliche Farb- und/oder Oberflächengestaltung aufweisen als das restliche Aufsatzteil 11.

## Patentansprüche

1. Heckseitige Luftleitvorrichtung , die im Bereich einer Dachhinterkante oberhalb einer Heckscheibe angeordnet ist und durch einen Spaltflügel (10) gebildet wird, der einen oberen quer verlaufenden Flügel (12), ein unteres profiliertes Flügelbett (13) und einen dazwischen liegenden, sich in Strömungsrichtung kontinuierlich verjüngenden Durchströmkanal (14) umfasst, wobei dem Durchströmkanal (14) eine Strömungsrampe (15) vorgelagert ist, **dadurch gekennzeichnet, daß** der Durchströmkanal (14) nach hinten hin zu einer hinteren Ausströmöffnung (29) ansteigt.

2. Heckseitige Luftleitvorrichtung nach Anspruch 1, **dadurch gekennzeichnet, dass** zumindest der Flügel (12), das Flügelbett (13) und der Durchströmkanal (14) an einem heckseitigen Aufsatzteil (11) angeordnet sind, das lösbar am darunter liegenden Aufbau (2) in Lage gehalten ist.

3. Heckseitige Luftleitvorrichtung nach Anspruch 1, **dadurch gekennzeichnet, dass** die Strömungsrampe (15) am Aufsatzteil (11) oder am vorgelagerten Dach (3) ausgebildet ist.

4. Heckseitige Luftleitvorrichtung nach den Ansprüchen 2 und 3, **dadurch gekennzeichnet, dass** das Aufsatzteil (11) an einer schwenkbaren Heckklappe (6) des Kraftfahrzeuges (1) befestigt ist.

5. Heckseitige Luftleitvorrichtung nach einem der vorangegangenen Ansprüche, **dadurch gekennzeichnet, dass** der Flügel (12) fest oder verstellbar mit Seitenabschnitten (26) des Aufsatzteiles (11) verbunden ist.

6. Heckseitige Luftleitvorrichtung nach einem der vorangegangenen Ansprüche, **dadurch gekennzeichnet, dass** eine Oberseite (22) des Flügels (12) etwa mit einer gedachten Verlängerung des Dachstrakes (17) fluchtet.

7. Heckseitige Luftleitvorrichtung nach einem der vorangegangenen Ansprüche, **dadurch gekennzeichnet, dass** der Flügel (12) schwenkbar an angrenzenden Seitenabschnitten (26) des Aufsatzteiles (11) gelagert ist und in seiner Anstellung veränderbar ist.

8. Heckseitige Luftleitvorrichtung nach einem der vorangegangenen Ansprüche, **dadurch gekennzeichnet, dass** die Strömungsrampe (15) etwa eine Flügellänge (L) vor dem eigentlichen Flügel (12) beginnt und aus dem Dachstrak (17) nach unten hin abfällt.

9. Heckseitige Luftleitvorrichtung nach einem der vorangegangenen Ansprüche, **dadurch gekennzeichnet, dass** der Durchströmkanal (14) im Eingangsbereich (24) mindestens so breit (d) ist wie die maximale Dicke (D) des Flügels (12).

10. Heckseitige Luftleitvorrichtung nach einem der vorangegangenen Ansprüche, **dadurch gekennzeichnet, dass** das Aufsatzteil (11) in einem mittleren Bereich seiner Quererstreckung unterhalb des Durchströmkanals (14) eine Aufnahme für eine Bremsleuchte (27) aufweist.

## Claims

1. Rear spoiler which is arranged in the region of a rear edge of the roof above a rear window and is formed by a slotted wing (10) which comprises an upper wing (12) running transversely; a lower profiled wing bed (13) and a through-flow channel (14) which is located in between and tapers continuously in the flow direction, a flow ramp (15) being mounted upstream of the through-flow channel (14), **characterized in that** the through-flow channel (14) rises to the rear to a rear outflow opening (29).

2. Rear spoiler according to Claim 1, **characterized in that** at least the wing (12), the wing bed (13) and the through-flow channel (14) are arranged on a rear attachment part (11) which is held in position releasably on the body (2) located beneath it.

3. Rear spoiler according to Claim 1, **characterized in that** the flow ramp (15) is formed on the attachment part (11) or on the roof (3) mounted in front.

4. Rear spoiler according to Claims 2 and 3, **characterized in that** the attachment part (11) is fastened to a pivotable tailgate (6) of the motor vehicle (1).

5. Rear spoiler according to one of the preceding claims, **characterized in that** the wing (12) is connected fixedly or adjustably to side sections (26) of the attachment part (11).

6. Rear spoiler according to one of the preceding claims, **characterized in that** an upper side (22) of the wing (12) is approximately flush with an imaginary extension of the roof streamline (17).

7. Rear spoiler according to one of the preceding claims, **characterized in that** the wing (12) is mounted pivotably on adjacent side sections (26) of the attachment part (11) and can be changed in its positioning.

8. Rear spoiler according to one of the preceding claims, **characterized in that** the flow ramp (15) begins approximately one wing length (L) in front of the actual wing (12) and drops downward from the roof streamline (17).

9. Rear spoiler according to one of the preceding claims, **characterized in that** the through-flow channel (14) is at least as wide (d) in the entry region (24) as the maximum thickness (D) of the wing (12).

10. Rear spoiler according to one of the preceding claims, **characterized in that** the attachment part (11) has a receptacle for a brake light (27) in a central region of its transverse extent below the through-flow channel (14).

## Revendications

1. Becquet arrière, qui est disposé dans la région d'un bord arrière de toit au-dessus d'une lunette arrière et est formé par un aileron fendu (10) qui comprend un aileron supérieur (12) s'étendant transversalement, une base d'aileron inférieure profilée (13) et un canal de passage (14) situé entre les deux et se rétrécissant continûment dans la direction d'écoulement, sachant que le canal de passage (14) est précédé d'une rampe d'écoulement (15), **caractérisé en ce que** le canal de passage (14) est ascendant vers l'arrière en direction d'une ouverture d'évacuation arrière (29).

2. Becquet arrière selon la revendication 1, **caractérisé en ce qu'**au moins l'aileron (12), la base d'aileron (13) et le canal de passage (14) sont disposés sur un élément rapporté arrière (11) qui est maintenu en position de manière détachable sur la carrosserie sous-jacente (2).

3. Becquet arrière selon la revendication 1, **caractérisé en ce que** la rampe d'écoulement (15) est configurée sur l'élément rapporté (11) ou sur le toit (3) situé devant.

4. Becquet arrière selon les revendications 2 et 3, **caractérisé en ce que** l'élément rapporté (11) est fixé sur un hayon arrière pivotant (6) du véhicule automobile (1).

5. Becquet arrière selon l'une des revendications précédentes, **caractérisé en ce que** l'aileron (12) est assemblé de manière fixe ou réglable à des parties latérales (26) de l'élément rapporté (11).

6. Becquet arrière selon l'une des revendications précédentes, **caractérisé en ce qu'**une face supérieure (22) de l'aileron (12) est environ alignée avec un prolongement imaginaire de la ligne d'écoulement (17) du toit.

7. Becquet arrière selon l'une des revendications précédentes, **caractérisé en ce que** l'aileron (12) est monté à pivotement sur des parties latérales attenantes (26) de l'élément rapporté (11) et sa position d'attaque peut être modifiée.

8. Becquet arrière selon l'une des revendications précédentes, **caractérisé en ce que** la rampe d'écoulement (15) commence environ à une longueur d'aileron (L) devant l'aileron proprement dit (12) et descend en pente vers l'arrière par rapport à la ligne d'écoulement (17) du toit.

9. Becquet arrière selon l'une des revendications précédentes, **caractérisé en ce que** le canal de passage (14) est, dans la région d'entrée (24), au moins aussi large (d) que l'épaisseur maximale (D) de l'aileron (12).

10. Becquet arrière selon l'une des revendications précédentes, **caractérisé en ce que** l'élément rapporté (11) présente dans une région centrale de son étendue transversale, en dessous du canal de passage (14), un logement pour un feu stop (27).
